Europäisches Patentamt

European Patent Office

Office européen des brevets

(11) Veröffentlichungsnummer: **0 380 732 B1**

(12) **EUROPÄISCHE PATENTSCHRIFT**

(45) Veröffentlichungstag der Patentschrift: **09.12.92**

(21) Anmeldenummer: **89101921.8**

(22) Anmeldetag: **03.02.89**

(51) Int. Cl.$^5$: **B60K 17/30**, B60B 27/00

(54) **Radkopf für die angetriebenen Lenkräder von Nutzfahrzeugen.**

(43) Veröffentlichungstag der Anmeldung:
**08.08.90 Patentblatt 90/32**

(45) Bekanntmachung des Hinweises auf die
Patenterteilung:
**09.12.92 Patentblatt 92/50**

(84) Benannte Vertragsstaaten:
**DE FR GB IT**

(56) Entgegenhaltungen:
**EP-A- 0 272 567**
**DE-A- 2 930 298**
**FR-A- 2 183 543**
**US-A- 4 424 879**

(73) Patentinhaber: **Xaver Fendt & Co.**
**Johann-Georg-Fendt-Strasse 4**
**W-8952 Marktoberdorf(DE)**

(72) Erfinder: **Teibtner, Rolf**
**Hochstätterberg 33 1/4**
**W-8952 Lengenwang(DE)**
Erfinder: **Halder, Hans**
**Hochbergerstrasse 30**
**W-7968 Saulgau 1 - Lutisweiler(DE)**

Rank Xerox (UK) Business Services

## Beschreibung

Die Erfindung betrifft einen Radkopf für die angetriebenen Lenkräder von Nutzfahrzeugen, insbesondere Ackerschleppern, umfassend ein mit einem gabelförmigen Bereich um eine fahrzeugseitige Radkopfachse verschwenkbares, ein angetriebenes Wellengelenk umgreifendes Gelenkgehäuse und eine Radnabe, die auf einem mit dem Gelenkgehäuse verschwenkenden Nabenträger drehbar gelagert und von einer an das Wellengelenk anschließenden Gelenkwelle über ein Reduktionsgetriebe in Planetenradbauweise angetrieben ist.

Ein derartiger Radkopf ist in der eine angetriebene Lenkachse betreffenden DE-PS 29 30 298 offenbart. Der bekannte Radkopf weist eine relativ geringe axiale Länge auf, so daß sich bei Verwendung von sehr breiten Reifen der gesamte Radkopf innerhalb der Reifenkontur des Rades befindet, unabhängig davon, in welcher Umschlagstellung das Rad zwecks Einstellung einer gewünschten Spurweite angebaut ist. Der Radkopf ist damit selbst unter rauhesten Einsatzbedingungen des Fahrzeuges gegen Beschädigungen geschützt. Allerdings ist dieser Schutz in allen Anbaustellungen des Rades nur dann gegeben, wenn die verwendeten Reifen relativ breit sind. Insbesondere in der Landwirtschaft kommen aber Reifen unterschiedlichster Breite zum Einsatz, und Reifen mit geringerer Breite sind nicht immer in der Lage, den Radkopf allseits schützend abzudecken.

Um den Lenkeinschlag zu vergrößern, ist bei der bekannten Lenkachse ferner das Wellengelenk in Achsrichtung weit außen angeordnet. Einer gewünschten noch weitergehenden Verlagerung des Wellengelenkes nach außen sind jedoch Grenzen gesetzt durch den im Verhältnis zum Durchmesser des Wellengelenkes sehr geringen Durchmesser der Bohrung im Tragzapfen, durch die die Gelenkwelle zum Reduktionsgetriebe führt.

Die Lagerung der Radnabe auf dem Nabenträger des Gelenkgehäuses erfolgt bei dem bekannten Radkopf mittels zweier Kegelrollenlager, deren Einstellung bei der Montage jedoch erhebliche Sorgfalt verlangt und daher relativ zeitaufwendig ist. Außerdem sind die Bauteile des Radkopfes verhältnismäßig kompliziert aufgebaut und erfordern eine aufwendige Fertigung.

Von diesem bekannten Stand der Technik ausgehend liegt der Erfindung die Aufgabe zugrunde, einen Radkopf der eingangs beschriebenen Gattung zu schaffen, der in fertigungstechnischer Hinsicht einfacher aufgebaut ist und in Achsrichtung kompakter baut als der bekannte, so daß der Radkopf auch durch verhältnismäßig schmale Reifen selbst bei eingestellter kleinster Spurweite vollständig abgedeckt wird.

Zur Lösung dieser Aufgabe wird vorgeschlagen, daß der Nabenträger das Hohlrad des Reduktionsgetriebes bildet und die Radnabe ausschließlich über ein einziges, in Art eines Vierpunkt-Lagers, beispielsweise eines Drahtwälzlagers oder eines Kreuzrollenlagers ausgebildetes Wälzlager auf dem Nabenträger gelagert ist.

Dadurch, daß nach der Erfindung das Hohlrad des Reduktionsgetriebes in den Nabenträger integriert ist, verringert sich die axiale Länge des Radkopfes praktisch um die Länge des Reduktionsgetriebes. Die notwendige Vergrößerung des Nabenträgers bedingt zwar eine Lagerung mit wesentlich größerem Durchmesser als bei den bisher bekannten Radköpfen, jedoch wird dies dadurch aufgehoben, daß durch die Anordnung des vorgeschlagenen Vierpunkt-Lagers nicht mehr zwei sondern nur noch ein Lager benötigt wird. Auf der anderen Seite macht es aber die Vergrößerung des Nabenträgers möglich, den Durchmesser der Bohrung im Gelenkgehäuse, durch die die zum Reduktionsgetriebe führende Gelenkwelle hindurchgeführt ist, größer als das Wellengelenk auszuführen. Hierdurch ist nicht nur eine erheblich einfachere Demontage der Gelenkwelle ohne Abbau des Rades im Falle einer Reparatur möglich, sondern außerdem das Wellengelenk noch weiter als dies bisher schon möglich war nach außen verlegbar, so daß sich auch bezüglich des möglichen Lenkeinschlages deutliche Verbesserungen ergeben.

Die in Anspruch 2 dargelegte Maßnahme, den Nabenträger als gesondertes Bauteil lösbar mit dem Gelenkgehäuse zu verbinden, gibt die Möglichkeit, die Radnabe und das Reduktionsgetriebe sowie die Lagerung ohne Einstellarbeiten vorzumontieren und als fertige Baueinheit der Montage mit dem Gelenkgehäuse zuzuführen.

Die Erfindung wird im folgenden anhand einer Zeichnung, die einen Radkopf teilweise in einer Schnittansicht wiedergibt, näher erläutert.

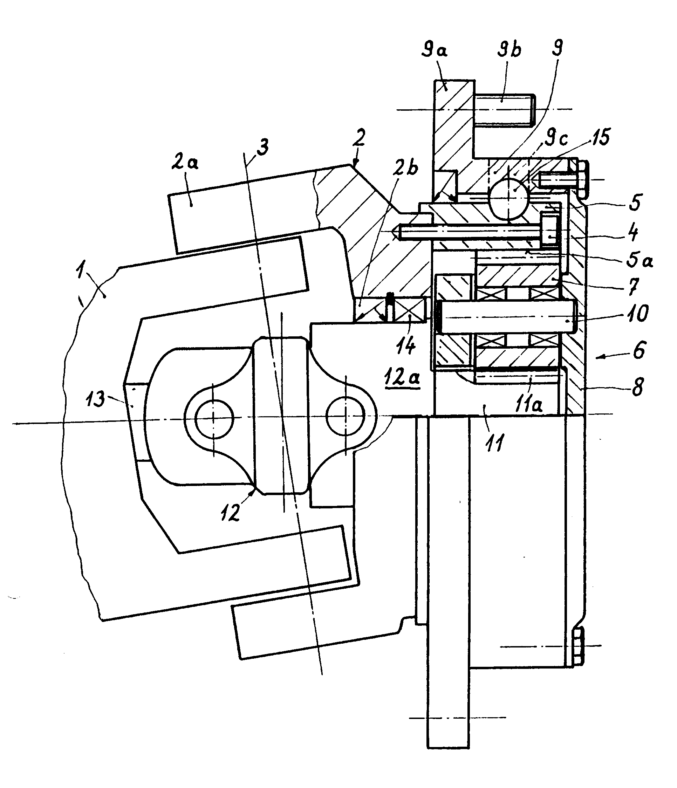

Von dem Fahrzeug, das mit dem erfindungsgemäßen Radkopf ausgerüstet ist, ist in der Zeichnung lediglich der Endbereich 1 des Achskörpers der Vorderachse wiedergegeben. Dieser Endbereich 1 ist gabelförmig ausgebildet und wird von dem im fahrzeugseitigen Bereich ebenfalls gabelförmigen Teil 2a eines Gelenkgehäuses 2 umgriffen. Das Gelenkgehäuse 2 ist um eine mit 3 angedeutete Achse um den Endbereich 1 des Achskörpers zum Lenken verschwenkbar, wobei die Achse 3 um einen Winkel von ca. 7,5 Grad gegenüber der Senkrechten nach außen geneigt ist.

Auf der dem Achskörper abgewandten Seite ist mittels mehrerer Schrauben 4 ein ringförmiger Nabenträger 5 lösbar mit dem Gelenkgehäuse 2 verbunden. Der Nabenträger 5 dient gleichzeitig als Hohlrad eines Reduktionsgetriebes 6 und ist daher mit einer Innenverzahnung 5a versehen. Das Reduktionsgetriebe 6, das auf eine Antriebsleistung ausgelegt ist, die bekannten Achsen gleicher Größe entspricht, weist drei mit der Verzahnung 5a kämmende, gleichmäßig über den Umfang verteilte Planetenräder 7 auf, die von beidseitig im Deckel 8 der Radnabe 9 gelagerten Bolzen 10 getragen sind. Die Planetenräder 7 kämmen mit einem zentralen Ritzel 11a, das in eine Gelenkwelle 11 eingearbeitet ist, welche über ein Wellengelenk 12 mit einer durch den Achskörper herangeführten Gelenkwelle 13 antriebsmäßig verbunden ist. Die nabenseitige Hälfte 12a des Wellengelenkes 12 ist dabei im Innern einer Bohrung 2b des Gelenkgehäuses 2 über ein Wälzlager 14 abgestützt.

Die Lagerung der Radnabe 9 erfolgt mittels eines einzigen Wälzlagers 15, das in Art eines Vierpunkt-Lagers ausgebildet ist. Hierzu ist die zylindrische Außenfläche des Nabenträgers 5 sowie die Radnabe 9 in ihrer Bohrung mit einer im Querschnitt im wesentlichen halbkreisförmigen Ausnehmung versehen, wobei sich die Ausnehmungen zu einem im wesentlichen kreisförmigen Ringraum ergänzen, der, entsprechend der Ausbildung eines Vierpunkt-Lagers mit 4 Laufflächen versehen ist. Als Wälzkörper sind Kugeln über eine verschließbare Einfüllöffnung 9c in den Ringraum eingefüllt.

Zur Befestigung der nicht gezeigten Räder des Fahrzeuges besitzt die Radnabe 9 ferner einen Flansch 9a mit Befestigungsschrauben 9b.

## Patentansprüche

1. Radkopf für die angetriebenen Lenkräder von Nutzfahrzeugen, insb. Ackerschleppern, umfassend ein mit einem gabelförmigen Bereich um eine fahrzeugseitige Radkopfachse (3) verschwenkbares, ein angetriebenes Wellengelenk (12) umgreifendes Gelenkgehäuse (2) und eine Radnabe (9), die auf einem mit dem Gelenkgehäuse (2) verschwenkenden Nabenträger (5) drehbar gelagert und von einer an das Wellengelenk (12) anschließenden Gelenkwelle (13) über ein Reduktionsgetriebe (6) in Planetenbauweise angetrieben ist,
   **dadurch gekennzeichnet,**
   daß der Nabenträger (5) das Hohlrad des Reduktionsgetriebes (6) bildet und die Radnabe (9) ausschließlich über ein einziges, in Art eines Vierpunkt-Lagers, beispielsweise eines Drahtwälzlagers oder eines Kreuzrollenlagers, ausgebildetes Wälzlager (15) auf dem Nabenträger (5) gelagert ist.

2. Lagerung nach Anspruch 1,
   **dadurch gekennzeichnet,**
   daß der Nabenträger (5) als gesondertes Bauteil lösbar mit dem Gelenkgehäuse (2) verbunden ist.

## Claims

1. Wheel-head for driven steering wheels of commercial vehicles, in particular agricultural tractors, comprising a hinge housing (2), which is pivotable within a forkshaped area around a wheel-head axis (3) at the vehicle and which surrounds a driven shaft hinge (12), and a wheel hub (9), which is rotatably mounted on a hub carrier (5), which is pivotable with the hinge housing (2) and driven by a hinge shaft (13), which is adjacent the shaft hinge (12), via a reduction gearing (6), **characterised in that** the hub carrier (5) farms the hollow wheel of a reduction gearing (6), and that the wheel hub (9) is mounted exclusively on the hub carrier (5) via a single roller bearing (15), which is arranged like a four-point bearing, for example a wire roller bearing or a junction roller bearing.

2. Mounting according to claim 1, **characterised in that** the hub carrier (5) is releasably connected to the hinge housing (2) as a separate assembly component.

## Revendications

1. Moyeu de roue comportant un engrenage réducteur pour essieu directeur de véhicules utilitaires, en particulier de tracteurs agricoles, comprenant un boîtier articulé (2) pouvant pivoter par une zone en forme de fourche sur un axe (3) du moyeu de roue du côté du véhicule et entourant un joint de cardan (12) commandé et un moyeu de roue (9), qui est monté avec rotation possible sur un support de moyeu (5) pivotant avec le boîtier articulé (2) et est commandé dans un type de construction planétaire par un arbre articulé (13) se raccordant à l'articulation d'arbre (12) par l'intermédiaire d'un engrenage réducteur (6), caractérisé en ce que le support de moyeu (5) forme la couronne dentée de l'engrenage réducteur (6) et le moyeu (9) est monté exclusivement sur le support de moyeu (5) par un palier à roulement (15) unique, du type d'un appui sur quatre points, par exemple d'un palier à roulement à douille de serrage ou d'un palier à rouleaux annulaires.

2. Logement selon la revendication 1, caractérisé en ce que le support de moyeu (5) est relié en tant que pièce particulière amovible sur le boîtier articulé (2).